# EUROPÄISCHE PATENTSCHRIFT

(11) **EP 2 556 785 B1**
(45) Veröffentlichungstag und Bekanntmachung des Hinweises auf die Patenterteilung: **22.02.2017**
(21) Anmeldenummer: 12401169.3
(22) Anmeldetag: 08.08.2012
(51) Int. Cl.: A47L 15/48

(54) **Haushaltgerät, insbesondere Geschirrspülmaschine**
Household appliance, in particular dishwasher
Appareil ménager, notamment lave-vaisselle

(30) Priorität: 10.08.2011 DE 102011052556
(43) Veröffentlichungstag der Anmeldung: 13.02.2013
(73) Patentinhaber: Miele & Cie. KG, 33332 Gütersloh (DE)
(72) Erfinder: Reilmann, Michael, 33611 Bielefeld (DE)

(56) Entgegenhaltungen:
- EP-A2- 2 286 708
- DE-A1- 3 626 887
- DE-A1-102008 038 504
- GB-A- 2 284 164

## Beschreibung

Die Erfindung betrifft ein Haushaltgerät, insbesondere in der Ausgestaltung als Geschirrspülmaschine, mit einem Behandlungsraum, insbesondere Spülbehälter, und einer Trocknungseinrichtung zur Trocknung von im Behandlungsraum befindlichem Behandlungsgut, insbesondere Spülgut, wobei die Trocknungseinrichtung einen Sorptionsbehälter zur Aufnahme von reversibel dehydrierbarem Sorptionsmittel aufweist und mit einem die Trocknungseinrichtung mit dem Behandlungsraum strömungstechnisch verbindenden Luftführungskanal.

Ein Haushaltgerät der eingangs genannten, d. h. gattungsgemäßen Art ist aus der DE 10 2008 038 504 A1 oder der EP2286708A2 bekannt geworden.

Die sogenannte "Sorptionstrocknung" ist aus dem Stand der Technik an sich bekannt. Danach wird zum Zwecke der Geschirrtrocknung dem vom Spülbehälter bereitgestellten Spülraum die sich dort nach dem letzten Spülgang befindliche feuchte Luft entnommen und einer Trocknungseinrichtung zugeführt. In der Trocknungseinrichtung findet eine Trocknung der Luft, d. h. eine Entfeuchtung derselben statt und die getrocknete Luft gelangt alsdann aus der Trocknungseinrichtung zurück in den Spülraum. Mittels eines Gebläses erfolgt eine Umwälzung der Luft und der so erzeugte Luftaustausch zwischen dem Spülbehälter und der Trocknungseinrichtung wird solange aufrechterhalten, bis eine wunschgemäße Trocknung der Luft und damit auch des im Spülraum befindlichen Spülguts erreicht ist.

Die Trocknungseinrichtung verfügt über einen Sorptionsbehälter, der ein reversibel dehydrierbares Sorptionsmittel bereitstellt. Die dem Spülraum entnommene feuchte Luft wird durch den Sorptionsbehälter geführt, infolgedessen es zu einem Kontakt zwischen der feuchten Luft und dem vom Sorptionsbehälter bereitgestellten Sorptionsmittel kommt. Dabei wird der feuchten Luft durch das reversibel dehydrierbare Sorptionsmittel Feuchtigkeit durch Kondensation entzogen, infolgedessen es zur Lufttrocknung kommt.

Zum Zwecke der Regenerierung, d. h. Desorption des Sorptionsmittels wird dieses erhitzt. Infolgedessen tritt das vom Sorptionsmittel zuvor aufgenommene Wasser als heißer Wasserdampf aus und kann der Trocknungseinrichtung entnommen werden. Typischerweise wird der bei einem Regenerierungsvorgang freiwerdende heiße Wasserdampf zum Zwecke der Wärmerückgewinnung dem Spülbehälter zugeführt, wo dann eine Erwärmung der Spülflotte und/oder des im Spülbehälter befindlichen Spülguts erfolgen kann.

Obgleich sich Trocknungseinrichtungen der vorbeschriebenen Art im alltäglichen Praxiseinsatz bewährt haben, besteht Verbesserungsbedarf, insbesondere mit Blick auf eine noch weiter verbesserte Effizienz. Es ist deshalb die Aufgabe der Erfindung, ein Haushaltgerät der eingangs genannten Art hinsichtlich seiner Trocknungseinrichtung weiter zu verbessern, insbesondere unter dem Gesichtspunkt der Energieeinsparung.

Zur Lösung dieser Aufgabe wird mit der Erfindung ein Haushaltgerät der eingangs genannten Art vorgeschlagen, das sich auszeichnet durch einen mit dem Sorptionsmittel in thermischer Wirkverbindung stehenden Wärmetauscher, wobei die Luft innerhalb der Trochnungseinrichtung wahlweise entweder durch das vom Sorptionsbehälter bereitgestellte Sorptionsmittel oder durch den Wärmetauscher geführt werden kann.

Die Trocknungseinrichtung nach der Erfindung verfügt über einen Wärmetauscher. Dieser kann beispielsweise als Röhrenwärmetauscher ausgebildet sein und über eine Mehrzahl von parallel zueinander verlaufenden Rohren verfügen. Der Wärmetauscher ist vorzugsweise zumindest zum Teil vom Sorptionsbehälter aufgenommen und damit vom Sorptionsmittel des Sorptionsbehälters umgeben. Im bestimmungsgemäßen Verwendungsfall wird der Wärmetauscher in einen Luftströmungskreislauf eingeschaltet und von Luft durchströmt. Infolgedessen kommt es zu einem indirekten Kontakt der Luft mit dem vom Sorptionsbehälter bereitgestellten Sorptionsmittel. "Indirekt" deshalb, weil die Luft unter Zwischenschaltung des Wärmetauschers durch den Sorptionsbehälter geführt wird. Ein direkter Kontakt der Luft mit dem Sorptionsmittel findet also nicht statt.

Der Wärmetauscher kann auch außerhalb des Sorptionsbehälters angeordnet sein. Denkbar ist beispielsweise, dass dieser außenseitig des Sorptionsbehälters an diesem angeordnet ist. Für die Funktionsweise ist allein von Bedeutung, dass der Wärmetauscher mit dem Sorptionsmittel in thermischer Wirkverbindung steht. "Thermische Wirkverbindung" im Sinne der Erfindung bedeutet dabei, dass zwischen dem Sorptionsmittel und dem vom Wärmetauscher geführten Medium ein Wärmeaustausch stattfinden kann, das heißt insbesondere Wärmeenergie vom Sorptionsmittel indirekt an das vom Wärmetauscher geführte Medium übergehen kann. Eine besonders optimierte thermische Wirkverbindung zwischen dem Sorptionsmittel und dem Wärmetauscher besteht dann, wenn der Wärmetauscher in das Sorptionsmittel eingebettet ist. Es wird mit der Erfindung deshalb vorgeschlagen, den Wärmetauscher zumindest zum Teil innerhalb des Sorptionsbehälters anzuordnen.

Die Hindurchführung von Luft durch den Wärmetauscher erfolgt wahlweise, d. h. nach Vorgabe. Zum Zwecke der Regenerierung wird aus dem Behandlungsraum, insbesondere Spülbehälter stammende Luft aufgeheizt und in an sich gewohnter Weise unter direktem Kontakt mit dem Sorptionsmittel durch den Sorptionsbehälter geführt. Sobald die Regenerierung, d. h. die Desorption des Sorptionsmittels infolge des Austreibens der darin enthaltenen Feuchtigkeit erfolgt ist, erfolgt im Unterschied zum Stand der Technik eine Umschaltung des Luftströmungsweges auf den Wärmetauscher. Hierfür ist eine Umschalteinrichtung, etwa ein Umschaltventil, vorhanden. Sobald diese Umschaltung erfolgt ist, strömt Luft nicht mehr unter direktem Kontakt mit dem Sorptionsmittel durch den Sorptionsbehälter, sondern wird vielmehr durch den Wärmetauscher geführt, so dass ein nur noch indirekter Kontakt zwischen der Luft und dem Sorptionsmittel besteht.

Die erfindungsgemäße Ausgestaltung erlaubt in vorteilhafter Weise eine gesteigerte Energierückgewinnung. Und dies bei gleichzeitig optimierter Regenerierung des Sorptionsmittels.

Während einer Regenerationsphase wird im Sorptionsmittel gebundene Feuchtigkeit ausgetrieben. Dies geschieht dadurch, dass dem Behandlungsraum Luft entnommen, aufgeheizt und anschließend durch den Sorptionsbehälter geführt wird. Die erhitzte Luft führt zu einem Erwärmen des Sorptionsmittels, woraufhin es zu einem Verdunsten der davon gebundenen Feuchtigkeit kommt. Die Feuchtigkeit wird von der warmen Luft aufgenommen und aus dem Sorptionsbehälter in den Behandlungsraum abtransportiert. Mittels eines Gebläses wird die Luft im Kreislauf solange geführt, bis der gewünschte Desorptionsgrad, d. h. Trocknung des Sorptionsmittels erreicht ist.

Die zu diesem Zeitpunkt im Sorptionsmittel infolge der Aufheizung noch vorhandene Wärme bleibt im Weiteren ungenutzt. Sie kann auch durch ein fortgeführtes Hindurchführen von Spülbehälterluft nicht nutzbar gemacht werden, weil es sich bei der Spülbehälterluft infolge der vorangegangenen Regeneration des Sorptionsmittels um feuchte Luft handelt, so dass ein Hindurchführen dieser Luft durch den Sorptionsbehälter zu einer erneuten Feuchtigkeitsaufnahme durch das Sorptionsmittel kommen würde, was es ja gerade zu vermeiden gilt. Der erfindungsgemäß vorgesehene Wärmetauscher schafft hier Abhilfe. Dieser gestattet nämlich die Hindurchführung von Luft durch den Sorptionsbehälter, so dass eine Wärmerückgewinnung erfolgen kann, aufgrund des indirekten Kontaktes zwischen Luft und Sorptionsmittel, zugleich aber sichergestellt ist, dass in der Luft enthaltene Feuchtigkeit nicht zurück in das Sorptionsmittel gelangt. Die erfindungsgemäß vorgesehene Ausgestaltung erbringt damit insgesamt den Vorteil, dass die zum Zwecke der Regenerierung in das Sorptionsmittel einzubringende Wärme zurückgewonnen und beispielsweise zur Aufheizung der Spülflotte und/oder des innerhalb des Spülbehälters befindlichen Behandlungsgutes oder Spülgutes genutzt werden kann, ohne dass die Gefahr einer erneuten Feuchtigkeitsaufnahme durch das Sorptionsmittel besteht.

Gemäß einer ersten Alternative der Erfindung weist der Wärmetauscher lufteingangsseitig einen Anschluss zur Versorgung mit Außenluft auf. Gemäß dieser Alternative wird nach Abschluss der Regenerationsphase von außerhalb des Behandlungsraums stammende Außenluft durch den Wärmetauscher geführt. Die im Sorptionsmittel gespeicherte Restwärme wird im indirekten Austausch von der Luft aufgenommen, die dann in den Behandlungsraum weitergeleitet wird, wo es zur Abgabe der Wärme an den Behandlungsraum und/oder das vom Behandlungsraum aufgenommene Behandlungsgut oder Spülgut und/oder die dort vorhandenen Spülflotte kommt.

Zum Zwecke der Umschaltung zwischen Regenerationsbetrieb einerseits und ergänzende Wärmerückgewinnung durch Wärmetauscherbetrieb andererseits verfügen der Lüftungskanal und/oder der Wärmetauscheranschluss über ein jeweiliges Sperrventil. Dabei können die beiden Sperrventile gemäß einem weiteren Vorschlag der Erfindung zu einer gemeinsamen Baugruppe miteinander kombiniert sein. Die Ausgestaltung der Sperrventile gestattet es, zwischen einer Luftführung über den Luftführungskanal einerseits und einer Luftführung über den Wärmetauscheranschluss andererseits hin- und herzuschalten. Dabei gelangt über den Luftführungskanal aus dem Behandlungsraum stammende Luft in den Sorptionsbehälter, wohingegen die nach einer Umschaltung in den Wärmetauscher einströmende Luft von außerhalb des Behandlungsraums stammt.

Gemäß einer zweiten und bevorzugten Alternative ist vorgesehen, dass der Wärmetauscher an den Luftführungskanal angeschlossen ist. Gemäß dieser Alternative erfolgt sowohl eine Speisung des Sorptionsbehälters, als auch eine Speisung des Wärmetauschers mit aus dem Behandlungsraum stammender Luft. Dabei wird die Behandlungsraumluft durch den Luftführungskanal geführt und wahlweise entweder im Falle der Regenerationsphase durch den Sorptionsbehälter und das darin befindliche Sorptionsmittel oder nach einem Umschalten zum Zwecke der ergänzenden Wärmerückgewinnung durch den Wärmetauscher hindurchgeführt.

Gemäß einer dritten Alternative kann auch vorgesehen sein, dass der Wärmetauscher an den Luftführungskanal angeschlossen ist und darüber hinaus luftausgangsseitig einen Anschluss zur Versorgung mit Außenluft aufweist. Diese kombinierte Ausgestaltung gestattet es, den Wärmetauscher sowohl mit Außenluft als auch mit Behandlungsraumluft beschicken zu können.

Zum Zwecke des strömungstechnischen Anschlusses der Trocknungseinrichtung an den Behandlungsraum ist der Luftführungskanal vorgesehen. Dieser verfügt über einen Zuluftkanal einerseits und einen Abluftkanal andererseits. Der Zuluftkanal verfügt seinerseits über einen Hauptkanal, der im Falle der bevorzugten Ausführungsalternative an einer Verzweigungsstelle in einen ersten Kanalabschnitt und einen zweiten Kanalabschnitt mündet. Dabei dient der erste Kanalabschnitt dem Anschluss des Hauptkanals an den Sorptionsbehälter, wohingegen der zweite Kanalabschnitt an den Wärmetauscher angeschlossen ist. Im Regenerationsbetrieb, wenn also Luft direkt durch den Sorptionsbehälter geführt wird, erfolgt eine Lufteinspeisung über den ersten Kanalabschnitt. Im Falle eines Wärmetauscherbetriebs wird die Luft hingegen über den zweiten Kanalabschnitt geführt.

Die Verzweigungsstelle verfügt über eine Umschalteinrichtung, etwa ein Umschaltventil. Mittels dieses Umschaltventils kann wahlweise zwischen dem ersten Kanalabschnitt und dem zweiten Kanalabschnitt hin und hergeschaltet werden, d. h. die Luftführung durch den Wärmetauscher bzw. direkt durch das Sorptionsmittel hindurch eingestellt werden.

Die Rohre des Wärmetauschers sind abluftseitig an ein gemeinsames Sammelrohr angeschlossen. Dieses mündet im Abluftkanal. Nach einem Passieren des Wärmetauschers gelangt also die Luft über das Sammelrohr in den Abluftkanal. Der Sorptionsbehälter ist strömungstechnisch ebenfalls an den Abluftkanal angeschlossen, und zwar unter Zwischenschaltung eines Anschlussrohres.

Es ist bevorzugterweise des Weiteren eine Steuerungseinrichtung vorgesehen. Die Steuerungseinrichtung verfügt über eine Messeinrichtung, mittels welcher der Feuchtegrad des Sorptionsmittels erfasst werden kann. Es ist des Weiteren eine Vergleichsschaltung vorgesehen. Diese dient dazu, die gemessenen Ist-Werte, d. h. den gemessenen Feuchtegrad mit einem vorgebbaren Soll-Wert zu vergleichen. Im Falle der Gleichheit, wenn also der vorgegebene Feuchtegrad des Sorptionsmittels erreicht ist, wird der Luftbetrieb auf den Wärmetauscher umgeschaltet, d. h. nicht mehr direkt durch das Sorptionsmittel geführt. In der Konsequenz kann die im noch nicht ausgekühlten Sorptionsmittel vorhandene Wärmeenergie rückgewonnen werden, eine erneute Durchfeuchtung des Sorptionsmittels infolge eines direkten Kontakts der feuchten Luft mit dem Sorptionsmittel findet allerdings nicht statt.

Mit der Erfindung wird ferner ein Verfahren zum Betrieb eines Haushaltgeräts der vorgenannten Art vorgeschlagen, bei dem ein Luftaustausch zwischen dem Behandlungsraum und der Trocknungseinrichtung durchgeführt wird, wobei die Luft innerhalb der Trocknungseinrichtung wahlweise entweder durch das vom Sorptionsbehälter bereitgestellte Sorptionsmittel oder durch den mit dem Sorptionsmittel in thermischer Wirkverbindung stehenden, vorzugsweise vom Sorptionsbehälter zumindest teilweise aufgenommenen, Wärmetauscher geführt wird. Die Umschaltung zwischen den beiden Strömungswegen erfolgt durch ein Umschaltventil. Dieses gibt unter Abschluss des einen Strömungsweges den anderen frei und umgekehrt.

Gemäß einer alternativen Verfahrensdurchführung wird ein Verfahren zum Betrieb eines Haushaltsgerätes der vorgenannten Art vorgeschlagen, bei dem ein Luftaustausch zwischen dem Behandlungsraum und der Trocknungseinrichtung durchgeführt wird, wobei die Luft durch das vom Sorptionsbehälter bereitgestellte Sorptionsmittel geführt wird, dadurch gekennzeichnet, dass durch den mit dem Sorptionsmittel in thermischer Wirkverbindung stehenden, vorzugsweise vom Sorptionsbehälter zumindest zum Teil aufgenommenen, Wärmetauscher von außerhalb des Behandlungsraums stammende Außenluft geführt wird. Zum Zwecke der Umschaltung zwischen den möglichen Strömungswegen sind Sperrventile vorgesehen, wobei im Falle einer Luftführung über den Luftführungskanal das diesbezügliche Sperrventile geöffnet und das Sperrventil des Wärmetauscheranschlusses geschlossen ist. Im umgekehrten Fall, wenn Außenluft über den Wärmetauscher geführt wird, ist das Sperrventil des Luftführungskanals geöffnet und das Sperrventil des Wärmetauscheranschlusses geöffnet. Bevorzugterweise sind die beiden Sperrventile miteinander zu einer gemeinsamen Baugruppe kombiniert, was eine Bedienung der Sperrventile mittels beispielsweise einer Steuereinheit vereinfacht. Weitere Merkmale und Vorteile der Erfindung ergeben sich aus der nachfolgenden Beschreibung anhand der Figuren. Dabei zeigen:
- Figur 1:: in schematischer Ansicht ein Haushaltgerät mit einer Trocknungseinrichtung nach der Erfindung im Regenerierbetrieb und
- Figur 2:: in schematischer Ansicht ein Haushaltgerät mit einer Trocknungseinrichtung nach der Erfindung im Wärmerückgewinnungsbetrieb.

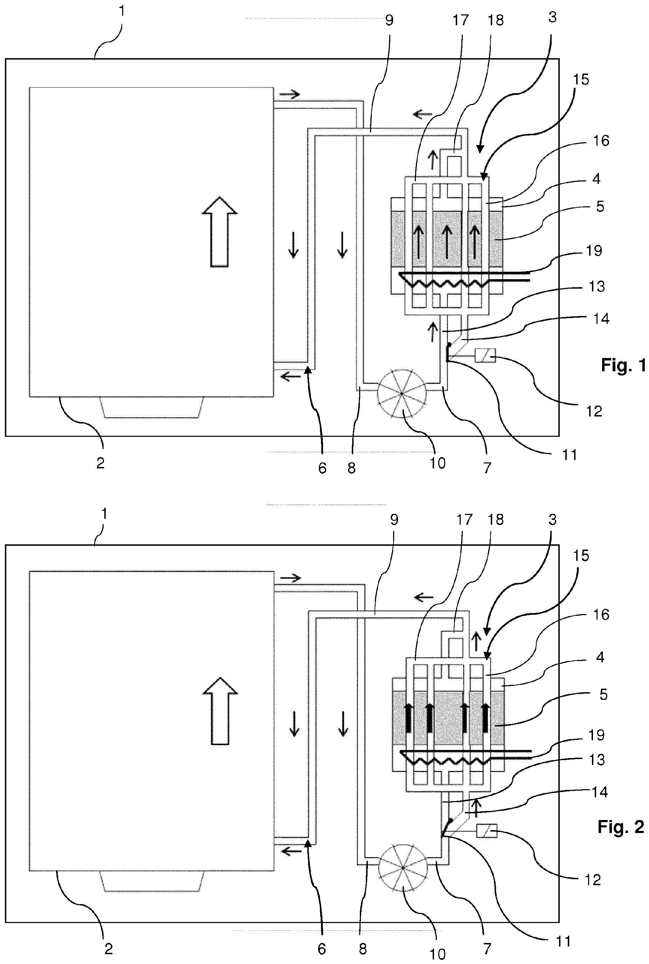

Die Figuren 1 und 2 zeigen jeweils in schematischer Darstellung ein Haushaltgerät in der Ausgestaltung einer Geschirrspülmaschine 1. Diese verfügt über einen Behandlungsraum in Gestalt eines Spülbehälters 2. In an sich bekannter Weise dient dieser Spülbehälter 2 der Aufnahme von zu reinigendem Spülgut, welches in den Figuren nicht näher dargestellt ist.

Die Geschirrspülmaschine 1 verfügt des Weiteren über eine Trocknungseinrichtung 3. Diese ist als sogenannte Sorption-Trocknungseinrichtung ausgebildet und verfügt über einen Sorptionsbehälter 4, der ein reversibel dehydrierbares Sorptionsmittel 5 enthält. Als Sorptionsmittel 5 kann beispielsweise Zeolith zum Einsatz kommen.

Die Trocknungseinrichtung 3 ist an den Spülbehälter 2 strömungstechnisch angeschlossen, zu welchem Zweck ein Luftströmungskanal 6 vorgesehen ist. In Entsprechung der in den Figuren 1 und 2 eingezeichneten Pfeile erfolgt bei einem bestimmungsgemäßen Betrieb ein Luftaustausch zwischen dem Spülbehälter 2 und der Trocknungseinrichtung 3, wobei die aus dem Spülbehälter 2 stammende Luft mittels eines Gebläses 10 angesaugt und durch die Trocknungseinheit 3 geführt und anschließend wieder in den Spülbehälter 2 eingeleitet wird. Dabei ist der Einsatz des Gebläses 10 optional. Insbesondere ist der Gebläseeinsatz während der Regenerationsphase nicht zwingend erforderlich.

Der Luftführungskanal 6 ist in einen Zuluftkanal 8, an den auch das Gebläse 10 angeschlossen ist, und einen Abluftkanal 9 unterteilt. Über den Zuluftkanal 8 strömt die Luft aus dem Spülbehälter 2 in die Trocknungseinrichtung 3 ein. Dabei ist der Zuluftkanal 8 seinerseits in einen Hauptkanal 7 und zwei Kanalabschnitte 13 und 14 unterteilt. Der Hauptkanal 7 mündet über eine Verzweigungsstelle 11 in die beiden Kanalabschnitte 13 und 14. Die Verzweigungsstelle 11 verfügt über ein Umschaltventil 12, so dass es möglich ist, die aus dem Spülbehälter 2 stammende und über den Hauptkanal 7 des Zuluftkanals 8 geführte Luft wahlweise über den ersten Kanalabschnitt 13 oder den zweiten Kanalabschnitt 14 weiterzuführen.

Der erste Kanalabschnitt 13 ist an den Sorptionsbehälter 4 angeschlossen. Abluftseitig ist ein Anschlussrohr 18 vorgesehen, der den Sorptionsbehälter 4 mit dem Abluftkanal 9 verbindet.

Dem vom Sorptionsbehälter 4 aufgenommenen Sorptionsmittel 5 ist in Strömungsrichtung eine Heizung 19 vorgeschaltet. Diese dient dazu, in den Sorptionsbehälter 4 über den ersten Kanalabschnitt 13 einströmende Luft vor einem Hindurchströmen durch das Sorptionsmittel 5 aufzuheizen. Dabei kann die Heizung 19 entweder dem Sorptionsmittel 5 strömungstechnisch vorgeschaltet oder in die Schüttung des Sorptionsmittels 5 eingebettet sein.

Die Trocknungseinrichtung 3 verfügt des Weiteren über einen Wärmetauscher 15. Dieser setzt sich aus einzelnen Rohren 16 zusammen, die parallel zueinander verlaufend ausgerichtet sind. Der Wärmetauscher 15 ist zumindest zum Teil vom Sorptionsbehälter 4 aufgenommen.

Abluftkanalseitig münden die Rohre 16 des Wärmetauschers 15 in einem gemeinsamen Sammelrohr 17. Dieses ist wiederum an den Abluftkanal 9 angeschlossen.

Bei entsprechender Stellung des Umlenkventils 12 gelangt die aus dem Spülbehälter 2 stammende Luft über den Hauptkanal 7 und den zweiten Kanalabschnitt 14 des Zuluftkanals 8 in die Rohre 16 des Wärmetauschers 15. Nach einem Durchströmen des Wärmetauschers 15 gelangt die Luft über das Sammelrohr 17 in den Abluftkanal 9 und von dort zurück in den Spülbehälter 2.

Die Funktionsweise der erfindungsgemäßen Ausgestaltung ist die Folgende.

Zum Zwecke der Regenerierung des Sorptionsmittels 5 wird Luft aus dem Spülbehälter 2 über den ersten Kanalabschnitt 13 direkt durch den Sorptionsbehälter 4 geführt. Dieser Regenerierungsbetrieb ist in Figur 1 dargestellt.

Während der Regenerierungsphase ist die Heizung 19 in Betrieb. Die den Sorptionsbehälter 4 durchströmende Luft wird also mittels der Heizung 19 erwärmt, was zu einem Aufheizen des Sorptionsmittels 5 führt. Infolgedessen kommt es zu einem Austreiben der vom Sorptionsmittel 5 gehaltenen Feuchtigkeit durch Verdunstung, wobei die den Sorptionsbehälter 4 durchströmende heiße Luft die in Form von Dampf freiwerdende Flüssigkeit aufnimmt, mitreißt und über den Abluftkanal 9 in den Spülbehälter 2 transportiert, wo dann eine Aufheizung von Spülflotte und/oder Spülgut erfolgen kann.

Sobald die Regenerationsphase abgeschlossen, das Sorptionsmittel 5 also von Flüssigkeit befreit ist, wird das Umschaltventil 12 in die in Figur 2 gezeigte Stellung umgeschaltet. Der Luftströmungsweg führt in diesem Fall dann nicht mehr über den ersten Kanalabschnitt 13 sondern über den zweiten Kanalabschnitt 14, infolgedessen die dem Spülraum 2 entstammende Luft durch den Wärmetauscher 15 bzw. dessen Rohre 16 geführt wird. Die Heizung 19 ist in dieser Stellung des Umschaltventils 12 ausgeschaltet.

Die Luftführung gemäß der Darstellung nach Figur 2 dient der Wärmerückgewinnung. Nach erfolgter Regeneration ist das Sorptionsmittel 5 noch aufgeheizt. Diese im Sorptionsmittel 5 enthaltene Wärme wird durch Übertrag auf die durch den Wärmetauscher 15 geführte Luft zurückgewonnen, denn die so aufgeheizte Luft kann zur weiteren Erwärmung der Spülflotte und/oder Spülgut genutzt werden.

Sobald die Wärmerückgewinnungsphase beendet ist, kann das Umschaltventil 12 wieder umgelegt und in die Stellung nach Figur 1 gebracht werden. Das regenerierte und abgekühlte Sorptionsmittel 5 steht dann für eine Sorptionstrocknung wieder zur Verfügung.

### Bezugszeichen

- 1: Geschirrspülmaschine
- 2: Spülbehälter
- 3: Trocknungseinrichtung
- 4: Sorptionsbehälter
- 5: Sorptionsmittel
- 6: Luftführungskanal
- 7: Hauptkanal
- 8: Zuluftkanal
- 9: Abluftkanal
- 10: Gebläse
- 11: Verzweigungsstelle
- 12: Umschaltventil
- 13: erster Kanalabschnitt
- 14: zweiter Kanalabschnitt
- 15: Wärmetauscher
- 16: Rohr
- 17: Sammelrohr
- 18: Anschlussrohr
- 19: Heizung

## Patentansprüche

1. Haushaltgerät, insbesondere Geschirrspülmaschine (1), mit einem Behandlungsraum, insbesondere einem Spülbehälter (2), und einer Trocknungseinrichtung (3) zur Trocknung von im Behandlungsraum befindlichem Behandlungsgut, insbesondere Spülgut, wobei die Trocknungseinrichtung (3) einen Sorptionsbehälter (4) zur Aufnahme von reversibel dehydrierbarem Sorptionsmittel (5) aufweist, und mit einem die Trocknungseinrichtung (3) mit dem Behandlungsraum strömungstechnisch verbindenden Luftführungskanal (6), **gekennzeichnet durch** einen mit dem Sorptionsmittel (5) in thermischer Wirkverbindung stehenden Wärmetauscher (15), in dem kein direkter Kontakt der Luft mit dem Sorptionsmittel (5) stattfindet, wobei die Luft innerhalb der Trochnungseinrichtung (3) wahlweise entweder **durch** das vom Sorptionsbehälter (4) bereitgestellte Sorptionsmittel (5) oder **durch** den Wärmetauscher (15) geführt werden kann.

2. Haushaltsgerät nach Anspruch 1,
**dadurch gekennzeichnet,**
**dass** der Wärmetauscher (15) zumindest zum Teil vom Sorptionsbehälter (4) aufgenommen ist.

3. Haushaltsgerät nach Anspruch 1 oder 2,
**dadurch gekennzeichnet,**
**dass** der Wärmetauscher (15) an den Luftführungskanal (6) angeschlossen ist.

4. Haushaltsgerät nach Anspruch 1, 2 oder 3,
**dadurch gekennzeichnet,**
**dass** der Wärmetauscher (15) lufteingangsseitig einen Anschluss zur Versorgung mit Außenluft aufweist.

5. Haushaltgerät nach einem der vorhergehenden Ansprüche,
**dadurch gekennzeichnet,**
**dass** der Wärmetauscher (15) ein das vom Sorptionsbehälter (4) aufgenommene Sorptionsmittel (5) durchdringendes Rohr (16) aufweist.

6. Haushaltgerät nach Anspruch 5,
**dadurch gekennzeichnet,**
**dass** der Wärmetauscher (15) eine Mehrzahl von Rohren (16) aufweist, die vorzugsweise parallel zueinander verlaufend ausgebildet sind.

7. Haushaltgerät nach einem der vorhergehenden Ansprüche,
**dadurch gekennzeichnet,**
**dass** der Luftführungskanal (6) einen Zuluftkanal (8) und einen Abluftkanal (9) aufweist.

8. Haushaltgerät nach Anspruch 7,
**dadurch gekennzeichnet,**
**dass** der Zuluftkanal (8) einen Hauptkanal (7) aufweist, der an einer Verzweigungsstelle (11) in einen ersten und einen zweiten Kanalabschnitt (13, 14) mündet, wobei vorzugsweise der Sorptionsbehälter (4) an den ersten Kanalabschnitt (13) angeschlossen ist und/oder der Wärmetauscher (15) an den zweiten Kanalabschnitt (14) angeschlossen ist.

9. Haushaltgerät nach Anspruch 8,
**dadurch gekennzeichnet,**
**dass** die Verzweigungsstelle (11) ein Umschaltventil (12) aufweist.

10. Haushaltgerät nach einem der Ansprüche 6 bis 9,
**dadurch gekennzeichnet,**
**dass** die Rohre (16) des Wärmetauschers (15) abluftseitig an ein gemeinsames Sammelrohr (17) angeschlossen sind, wobei das Sammelrohr (17), insbesondere unter Zwischenschaltung eines Anschlussrohres (18), vorzugsweise an den Abluftkanal (9) angeschlossen ist.

11. Verfahren zum Betrieb eines Haushaltgeräts, insbesondere einer Geschirrspülmaschine (1), nach einem der vorhergehenden Ansprüche 1 bis 10, bei dem ein Luftaustausch zwischen dem Behandlungsraum und der Trocknungseinrichtung (3) durchgeführt wird, **dadurch gekennzeichnet, dass** die Luft innerhalb der Trocknungseinrichtung (3) wahlweise entweder durch das vom Sorptionsbehälter (4) bereitgestellte Sorptionsmittel (5) oder durch den mit dem Sorptionsmittel (5) in thermischer Wirkverbindung stehenden Wärmetauscher (15), in dem kein direkter Kontakt der Luft mit dem Sorptionsmittel (5) stattfindet, geführt wird.

12. Verfahren nach Anspruch 11,
**dadurch gekennzeichnet,**
**dass** der Feuchtegrad des Sorptionsmittels (5) gemessen wird.

13. Verfahren nach Anspruch 12,
**dadurch gekennzeichnet,**
**dass** der gemessene Feuchtegrad mit einem vorgebbaren Vergleichswert verglichen wird und vorzugsweise bei Gleichheit von gemessenem Feuchtegrad und vorgebbarem Vergleichswert die Luftführung auf eine Durchströmung des Wärmetauschers (15) umgestellt wird.

## Claims

1. Domestic appliance, in particular a dishwasher (1), comprising a treatment chamber, in particular a washing container (2), and a drying device (3) for drying items to be treated, in particular washware, located in the treatment chamber, the drying device (3) comprising a sorption container (4) for receiving reversibly dehydratable sorbent (5), and comprising an air-conducting channel (6) that produces a flow connection between the drying device (3) and the treatment chamber, **characterised by** a heat exchanger (15) that is in thermal operative connection with the sorbent (5), in which heat exchanger there is no direct contact between the air and the sorbent (5), the air inside the drying device (3) being selectively conductible either through the sorbent (5) provided by the sorption container (4) or through the heat exchanger (15).

2. Domestic appliance according to claim 1,
**characterised in that**
the heat exchanger (15) is received by the sorption container (4) at least in part.

3. Domestic appliance according to either claim 1 or claim 2,
**characterised in that**
the heat exchanger (15) is connected to the air-conducting channel (6).

4. Domestic appliance according to any of claims 1, 2 or 3,
**characterised in that**
the heat exchanger (15) comprises, on the air inlet side, a connection for a supply of outside air.

5. Domestic appliance according to any of the preceding claims,
**characterised in that**
the heat exchanger (15) comprises a pipe (16) that passes through the sorbent (5) received by the sorption container (4).

6. Domestic appliance according to claim 5,
**characterised in that**
the heat exchanger (15) comprises a plurality of pipes (16) that preferably extend in parallel with one another.

7. Domestic appliance according to any of the preceding claims,
**characterised in that**
the air-conducting channel (6) comprises an air supply channel (8) and an exhaust channel (9).

8. Domestic appliance according to claim 7,
**characterised in that**
the air supply channel (8) comprises a main channel (7) that opens into a first and a second channel portion (13, 14) at a junction (11), the sorption container (4) preferably being connected to the first channel portion (13) and/or the heat exchanger (15) preferably being connected to the second channel portion (14).

9. Domestic appliance according to claim 8,
**characterised in that**
the junction (11) comprises a changeover valve (12).

10. Domestic appliance according to any of claims 6 to 9,
**characterised in that**
the pipes (16) of the heat exchanger (15) are connected to a common manifold (17) on the exhaust side, the manifold (17) preferably being connected to the exhaust channel (6), in particular by means of an interposed connecting pipe (18).

11. Method for operating a domestic appliance, in particular a dishwasher (1), according to any of the preceding claims, claims 1 to 10, in which an exchange of air is carried out between the treatment chamber and the drying device (3), **characterised in that** the air inside the drying device (3) is selectively conducted either through the sorbent (5) provided by the sorption container (4) or through the heat exchanger (15) which is in thermal operative connection with the sorbent (5) and in which heat exchanger there is no direct contact between the air and the sorbent (5).

12. Method according to claim 11,
**characterised in that**
the moisture content of the sorbent (5) is measured.

13. Method according to claim 12,
**characterised in that**
the measured moisture content is compared with a predeterminable comparative value, and preferably, if the measured moisture content is equal to the predeterminable comparative value, the air conduction is converted to a throughflow through the heat exchanger (15).

## Revendications

1. Appareil électroménager, en particulier lave-vaisselle (1), avec un espace de traitement, en particulier une cuve de lavage (2), et un système de séchage (3) pour le séchage d'articles à traiter situés dans l'espace de traitement, en particulier d'articles à laver, dans lequel le système de séchage (3) présente un récipient de sorption (4) destiné à recevoir du produit de sorption (5) pouvant être déshydrogéné de façon réversible, et avec un canal de guidage d'air (6) raccordant en écoulement le système de séchage (3) à l'espace de traitement, **caractérisé par** un échangeur de chaleur (15), qui est en liaison opératoire thermique avec le produit de sorption (5) et dans lequel il n'y a aucun contact direct de l'air avec le produit de sorption (5), dans lequel l'air à l'intérieur du système de séchage (3) peut être guidé au choix soit à travers le produit de sorption (5) fourni par le récipient de sorption (4), soit à travers l'échangeur de chaleur (15).

2. Appareil électroménager selon la revendication 1,
**caractérisé en ce que**
l'échangeur de chaleur (15) est reçu au moins partiellement par le récipient de sorption (4).

3. Appareil électroménager selon la revendication 1 ou 2,
**caractérisé en ce que**
l'échangeur de chaleur (15) est raccordé au canal de guidage d'air (6).

4. Appareil électroménager selon la revendication 1, 2 ou 3,
**caractérisé en ce que**
l'échangeur de chaleur (15) présente, côté entrée d'air, un raccordement pour l'alimentation en air extérieur.

5. Appareil électroménager selon l'une des revendications précédentes,
**caractérisé en ce que**
l'échangeur de chaleur (15) présente un tube (16) traversant le produit de sorption (5) reçu par le récipient de sorption (4).

6. Appareil électroménager selon la revendication 5,
**caractérisé en ce que**
l'échangeur de chaleur (15) présente une pluralité de tubes (16) qui sont de préférence constitués de façon parallèle entre eux.

7. Appareil électroménager selon l'une des revendications précédentes,
**caractérisé en ce que**
le canal de guidage d'air (6) présente un canal d'arrivée d'air (8) et un canal d'évacuation d'air (9).

8. Appareil électroménager selon la revendication 7,
**caractérisé en ce que**
le canal d'arrivée d'air (8) présente un canal principal (7) qui, au niveau d'un emplacement de ramification (11), débouche dans un premier et un deuxième tronçon de canal (13, 14), dans lequel de préférence le récipient de sorption (4) est raccordé au premier tronçon de canal (13) et/ou l'échangeur de chaleur (15) est raccordé au deuxième tronçon de canal (14).

9. Appareil électroménager selon la revendication 8,
**caractérisé en ce que**
l'emplacement de ramification (11) présente une vanne de commutation (12).

10. Appareil électroménager selon l'une des revendications 6 à 9,
**caractérisé en ce que**
les tubes (16) de l'échangeur de chaleur (15) sont, côté évacuation d'air, raccordés à un tube collecteur (17) commun, dans lequel le tube collecteur (17) est de préférence raccordé au canal d'évacuation d'air (9), en particulier avec interposition d'un tube de raccordement (18).

11. Procédé de fonctionnement d'un appareil électroménager, en particulier d'un lave-vaisselle (1), selon l'une des revendications précédentes 1 à 10, dans lequel un échange d'air est réalisé entre l'espace de traitement et le système de séchage (3), **caractérisé en ce que** l'air à l'intérieur du système de séchage (3) est guidé au choix soit à travers le produit de sorption (5) fourni par le récipient de sorption (4), soit à travers l'échangeur de chaleur (15), qui est en liaison opératoire thermique avec le produit de sorption (5) et dans lequel il n'y a aucun contact direct de l'air avec le produit de sorption (5).

12. Procédé selon la revendication 11,
**caractérisé en ce que**
le degré d'humidité du produit de sorption (5) est mesuré.

13. Procédé selon la revendication 12,
**caractérisé en ce que**
le degré d'humidité mesuré est comparé à une valeur de comparaison pouvant être prédéfinie et, de préférence, en cas d'égalité entre le degré d'humidité mesuré et la valeur de comparaison pouvant être prédéfinie, le guidage d'air est commuté vers un écoulement d'air traversant l'échangeur de chaleur (15).
